# EUROPEAN PATENT SPECIFICATION

(11) **EP 1 167 253 B1**
(45) Date of publication and mention of the grant of the patent: **14.04.2004**
(21) Application number: 01202437.8
(22) Date of filing: 25.06.2001
(51) Int. Cl.: B65G 69/00

(54) **Device for stopping trucks**
Anhaltevorrichtung für Kraftfahrzeuge
Dispositif d'arret pour camions

(30) Priority: 23.06.2000 NL 1015514
(43) Date of publication of application: 02.01.2002
(73) Proprietor: STERTIL B.V., NL-9288 CA Kootstertille (NL)
(72) Inventor: Berends, Jan, 9285 ML Buitenpost (NL)
(74) Representative: Grootscholten, Johannes Antonius Maria

(56) References cited:
- DE-A- 19 618 047
- FR-A- 2 672 578
- PATENT ABSTRACTS OF JAPAN vol. 018, no. 228 (P-1730), 25 April 1994 (1994-04-25) & JP 06 019535 A (GENNEN YUSO KK), 28 January 1994 (1994-01-28)

## Description

The present invention relates to a device for stopping a truck which is reverse parked at a loading dock.

When a truck for loading and/or unloading is parked at a loading dock, it is important that the truck cannot move away before the loading and/or unloading is completed. There is a danger of a fork-lift truck or similar transport means on its way to the truck possibly falling off the loading dock behind the truck if the truck accelerates and drives away unexpectedly. From a logistics viewpoint it is moreover very unfavourable for a truck to move off prematurely, i.e. before completion of loading and/or unloading.

It is known in the art to make use of devices with arms which are movable in order to engage at least one of the wheels of the truck and to only release it when loading and/or unloading is completed. Such a device is for instance known from the International patent application PCT/NL94/00326.

Such a known device otherwise also effectively prevents the vehicle from being able to roll away gradually from the parking space, for instance as a result of slightly worn brakes, driving in and out of fork-lift trucks or pallet trucks and so on.

The known art has a number of drawbacks. As a result of legislation in different countries the sides of trucks are to an ever increasing extent being covered by side panels so as to prevent the possibility of accidents occurring, particularly with cyclists and pedestrians. The space available for a known device to engage a wheel is hereby becoming increasingly smaller. With the known devices there is the long term danger of these being unable to engage a wheel to a sufficient extent due to these covering side and rear panels; panels are nowadays also being arranged on the underside of trucks to prevent accidents. Another drawback of the known devices is that they are complex and rather susceptible to malfunction, particularly when a truck drives over such a device during reverse parking against the loading dock.

A device for stopping a truck, comprising a portable signalling apparatus to be hung at the cab of the truck is disclosed in FR-A-2 672 578.

The present invention has for its object to at least alleviate and preferably obviate the drawbacks of the known art, for which purpose a device is provided which is distinguished by a signalling apparatus in a road surface situated in front of the loading dock at a first predetermined distance from the loading dock, wherein the signalling apparatus comprises directing means which are oriented to at least one location of a driver in the cab which is dependent on the length of the truck and the height of the cab of the truck.

Owing to the signalling apparatus with the directing means it will be immediately apparent to a driver when he can or cannot drive away, thereby realizing standstill of a truck parked in reverse at a loading dock in efficient manner. As signalling apparatus use can for instance be made of a red light, which is oriented by the directing means to the location of the driver in the cab, who will hereby immediately realise whether or not he can drive away. This in contrast to engaging one of the wheels according to the prior art, where such a realisation is not automatically present, but which perhaps occurs when the truck is being held in place while the driver wishes to drive away. The signalling apparatus can therefore be an addition to a known engaging device with for instance arms for engaging at least one of the wheels.

In a preferred embodiment the device has the feature that the signalling apparatus comprises at least one signal source with at least approximately as many directing means at the signal source as the number of potential locations, wherein the directing means are fixedly oriented to these locations. Trucks can have different lengths. Measured from the loading dock, these lengths determine the orientation of the directing means. By using one signal source in combination with different directing means, in accordance with the number of potential locations, the number of signal sources is limited, while a signal is still always given to the driver at each of the potential locations.

Alternatively or additionally, the device can have the feature that the signalling apparatus comprises at least one signal source with adjustable directing means at the signal source, and wherein the directing means can be adjustably directed into at least approximately as many positions as the number of potential locations. The locations then of course correspond with the positions taken up by the directing means. Each of the potential locations can thus be covered with a single signal source and the adjustable directing means.

In such an embodiment the device can further comprise a detector for determining a relevant potential location and can comprise a control for adjusting the directing means to the relevant potential location. A simple adjustment of the directing means is realized in this manner. Alternatively or additionally, the directing means can be drivable using a control in order to pass through at least approximately all the potential locations. It is hereby possible to suffice once again with a single combination of a signalling apparatus and adjustably drivable directing means to enable a clear signal to be given to the driver, at all the potential locations or at least approximately all those locations, as to when he is free to leave or not.

Other favourable preferred embodiments and examples of the invention will be elucidated on the basis of the description following hereinbelow, which is formulated with reference to the annexed figures, in which:
fig. 1 shows a perspective view of a device according to the present invention in operation;
fig. 2 shows a perspective view of a part of the device shown in fig. 1;
fig. 3 shows an alternative for the embodiment shown in fig. 2;
fig. 4 shows an alternative for the embodiments shown in fig. 2 and 3; and
fig. 5 shows another alternative as embodiment of the present invention.

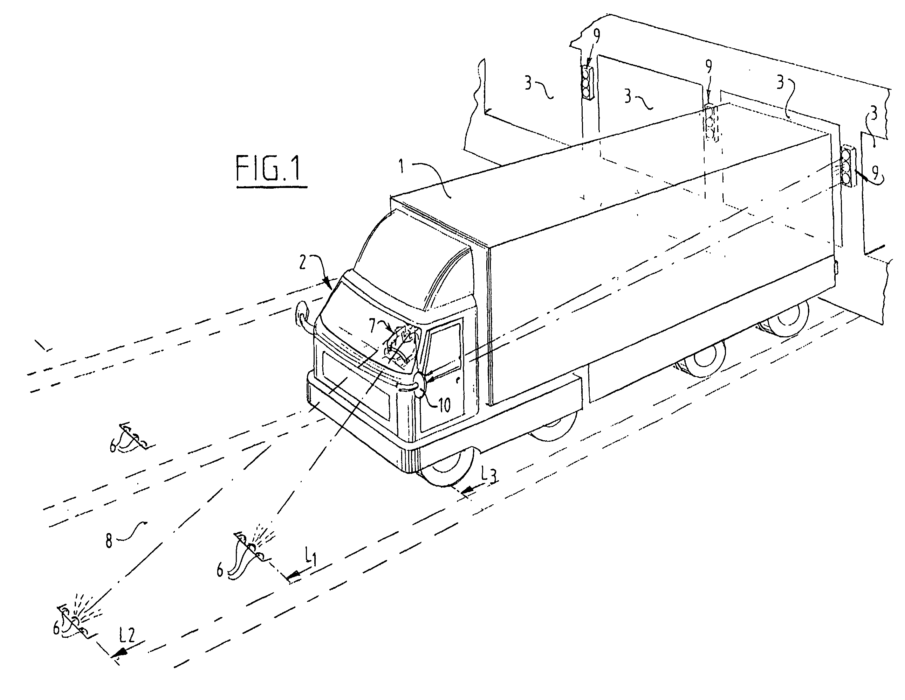

Fig. 1 shows a device according to the present invention in operation.

In fig. 1 a truck 1 with a cab 2 is reverse parked against a loading dock 3 of a building 4. The truck has a length L3 as measured from the outside wall of building 4. In the road surface 5 in front of truck 1 are arranged signalling apparatuses which serve as signal source and which are designed as lamps 6. The light signals coming from lamps 6 are oriented to a driver 7 in cab 2 of truck 1.

In fig. 1 various groups of lamps 6 are arranged in a strip 8 of the road surface 5. Both groups of lamps 6 are oriented to the same driver 7. Both groups of lamps 6 are situated respectively at distance L1 and L2 as measured from the outside wall of building 4 in which loading dock 3 is situated. Adjacently of loading docks 3 are also arranged groups of lamps 9 which the driver 7 can see in his rear-view mirror 10.

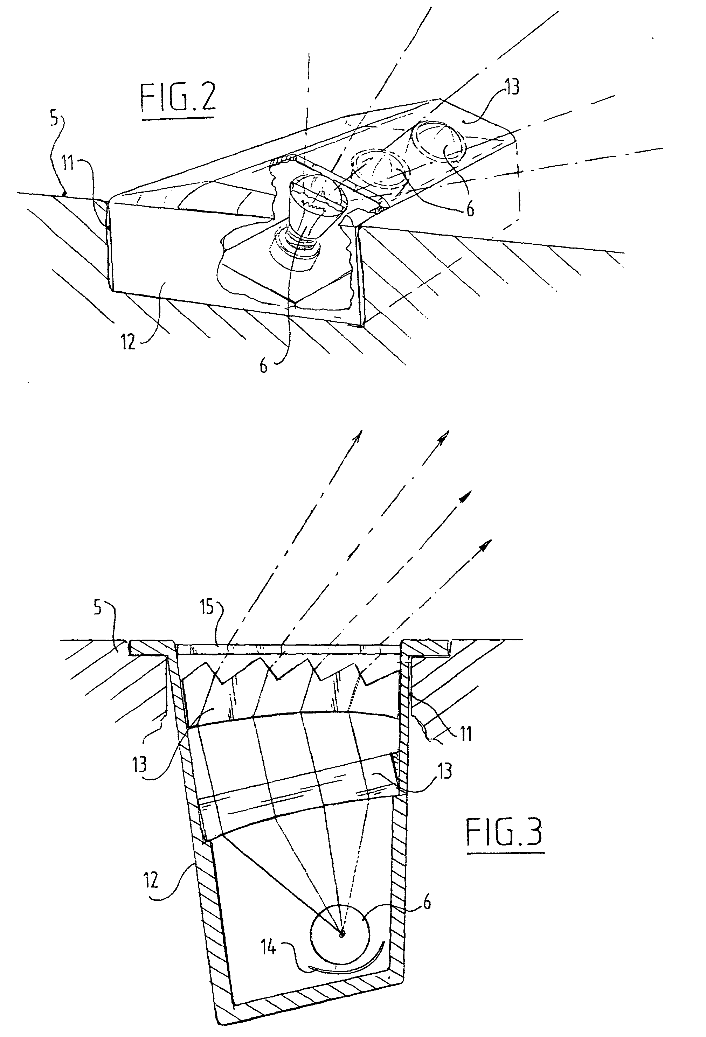

When a loading dock 3 is reserved for trucks 1 with a specific length L3 known in advance, lamps 6 can be fixedly oriented, for which purpose directing means can be used as described hereinbelow with particular reference to fig. 2 and fig. 3. The groups of lamps 6 at distance L1 and at distance L2 from the outside wall of building 4 can herein have a fixed orientation, which can possibly also depend on variable heights of driver 7 in cab 2.

If however trucks of different length can be parked at loading dock 3 for loading and/or unloading thereof, lamps 6 are preferably adjustably oriented or use is for instance made of groups of lamps 6 with mutually differing orientation. Each of the groups of lamps 6 at respective distances L1 and L2 can then, in contrast to the situation of fig. 1, be oriented to a location which depends on the height of driver 7 in cab 2 and the length L3 of truck 1. Lamps 6 can then each still also be fixedly oriented.

Other preferred embodiments of signalling apparatuses according to the present invention will be further discussed hereinbelow.

Fig. 2 shows one of the groups of lamps 6 of fig. 1. In the embodiment shown here a recess 11 is arranged in road surface 5 for receiving the group of lamps 6 therein. The group of lamps 6 is placed in a housing 12 which is covered with a partly broken-away number of transparent lenses 13 for directing the beams of light from the lamps. The directing means, which are formed by lenses 13, are therefore stationary, as also shown in fig. 1. The lenses 13 forming the directing means are however ground such that the orientation of fig. 1 is achieved. Lenses 13 thus form part of the housing, which protects lamps 6 on at least the upper side when vehicles drive thereover. The top part of housing 12 - with lenses 13 therein - can additionally be depressible. The obstacle to be taken by a vehicle driving thereover is thus reduced under the influence of the weight of the vehicle without adversely affecting the operation of the device.

Fig. 2 shows that the leftmost lamp 6 is turned on; the other two lamps 6 in housing 12 are off. In a preferred embodiment the outer lamps 6 can be of the group red and switch alternately on and off, while the middle lamp 6 is for instance green. When the truck must remain standing still, the outer lamps 6 can flash alternately on and off so that, when the truck is allowed to leave, the middle green light can be switched on. Other flashing light configurations are also possible, for instance with only two lamps, one of which is then red and one green.

It is noted that in the embodiment shown in fig. 2 the lamps 6 form a heating. An extra heating can additionally be provided. The heat from the lamps or the additional heating effectively prevent the device being no longer visible as a result of being covered in snow. An additional heating can be provided with energy in the same manner as the lamps themselves, i.e. a power supply cable (not shown) which can run to the device through a cable duct cut into road surface 5.

It is further noted that although lamps 6 are shown as signal sources in fig. 2, the function hereof can likewise be realized using other means, such as LEDs, which are not explicitly shown here. Such a configuration can for instance be a series of multi-LEDs, which have a long life-span and which in combination with the directing means can produce a per se sufficient light intensity. A recess for arranging in the road surface 5 for receiving the housing therein can moreover be made much smaller with a considerably lower chance of damage thereto. In such a case is anticipated that even construction on road surface 5 becomes possible, for which purpose only a cable duct (not shown) with a power supply cable (not shown) then has to be drawn through the road surface. A series of multi-LEDs with an associated number of lenses has the advantage that the various distances to be realized for the purpose of directing the light signals are also actually obtained.

Fig. 3 shows an alternative embodiment, wherein a housing 12 in a recess 11 in a road surface 5 comprises a single light source 6. A mirror 14 is disposed behind light source 6 in order to direct as much of the light from light source 6 as possible upward. Between light source 6 and the upper surface of road surface 5 are arranged two successive lenses 13, the first of which in the light path makes the beams of light parallel while the second lens 13 in the light path ensures deflection in the desired directions. Housing 12 is covered with a transparent covering 15. In the embodiment shown in fig. 3 the orientation is also stationary.

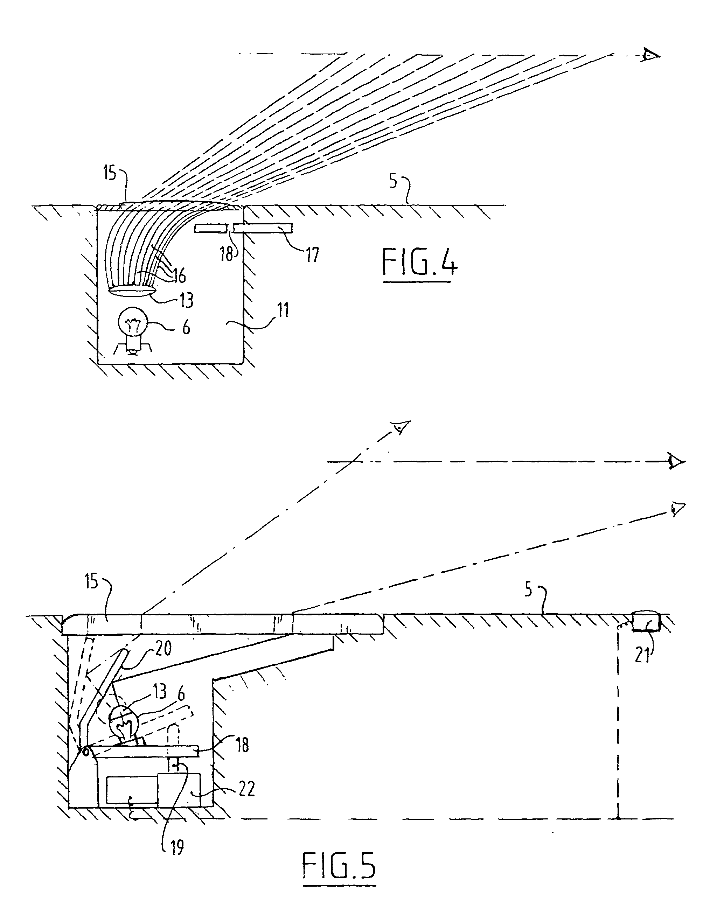

In fig. 4 is shown an embodiment where lamp 6 is placed without housing in a hole 11 in road surface 5. Hole 11 is covered with a transparent covering 15, so that oriented beams of light can exit. In the embodiment shown here the directing means are formed by a glass fibre bundle 16 which has a curvature and connects to lens 13 to intercept light from lamp 6. The desired orientation of the light beams exiting through the transparent covering is achieved by the curvature of the glass fibre bundle.

A diaphragm is further shown schematically in cross-section in fig. 4. Diaphragm 17 contains a passage 18 for transmission of light. Diaphragm 17 is slidable over the underside of the transparent covering 15, so that some of the beams of light exiting from glass fibre bundle 16 can be blocked. In this manner the orientation of the signalling apparatus can be influenced, depending on the length L3 of the truck in fig. 1 and also the height of the driver in cab 2 of truck 1.

A further development of the principle of adjustability shown in fig. 4 is depicted in fig. 5. Lamp 6 is herein mounted on a tilting plate 18 which rests on an extendable rod 19, while the light coming from lamp 6 can be directed outward through the transparent covering 15 via mirror panel 20. The orientation of the exiting light beams can be influenced subject to the position of the tilting plate, and thereby mirror panel 20. Use is made for this purpose of sensors 21 in road surface 5 to determine the length L3 of truck 1 so as to set tilting plate 18 in position in accordance therewith using rod 19, which is connected for this purpose to a drive 22, which is connected to sensors 21. A control is possibly further arranged between sensors 21 and motor 22 to process the information from sensors 21 and to drive motor 22 in accordance therewith.

Different alternative or additional embodiments are possible within the scope of the appended claims. Signalling apparatuses other than the described lamps 6 can for instance be used and adjustable directing means other than those described here can be applied, for instance with tiltable grills, and so on.

## Claims

1. Device for stopping a truck (1) which is reverse parked at a loading dock (3), comprising a signalling apparatus, **characterised in that** the signalling apparatus is arranged in a road surface (5) situated in front of the loading dock at a first predetermined distance (L1,L2) from the loading dock, and comprising directing means (13,16,20) which are oriented so as to direct the signal towards at least one location of a driver in the cab (2) which is dependent on the length of the truck and the height of the cab of the truck.

2. Device as claimed in claim 1, wherein the signalling apparatus comprises at least one signal source (6) with at least approximately as many directing means (13,16) at the signal source as the number of potential locations, wherein the directing means are fixedly oriented to these locations.

3. Device as claimed in claim 1, wherein the signalling apparatus comprises at least one signal source (6) with adjustable directing means (20) at the signal source, and the directing means can be adjustably directed into at least approximately as many positions as the number of potential locations.

4. Device as claimed in claim 3, wherein the device further comprises a detector (21) for determining a relevant potential location and comprises a control for adjusting the directing means to the relevant potential location.

5. Device as claimed in claim 3, wherein the directing means are drivable using a control in order to pass through at least approximately all the potential locations.

6. Device as claimed in claim 1, wherein the directing means comprise at least one lens.

7. Device as claimed in claim 3, wherein the adjustable directing means comprise a movable diaphragm for selective transmission corresponding with the relevant potential location.

8. Device as claimed in claim 3, wherein the directing means comprise a tiltable mirror panel.

9. Device as claimed in claim 1, wherein the signalling apparatus is arranged in a housing which is protective at least on the upper side.

10. Device as claimed in claim 9, wherein the upper side of the housing is depressible.

11. Device as claimed in claim 1, further comprising a heating to prevent covering with snow.

12. Device as claimed in claims 2 and 11, wherein the heating comprises a lamp forming the signal source.

13. Device as claimed in claim 2, wherein the signal source comprises a LED.

## Patentansprüche

1. Vorrichtung zum Anhalten eines Lastkraftwagens (1), der mit seiner Rückseite an einer Laderampe (3) geparkt ist, mit einer Signalisiervorrichtung, **dadurch gekennzeichnet, dass** die Signalisiervorrichtung in der Straßenoberfläche (5) vor der Laderampe in einem ersten vorbestimmten Abstand (L1, L2) von der Laderampe angeordnet ist und Richtmittel (13, 16, 20) aufweist, die so orientiert sind, dass das Signal nach wenigstens einer Position des Fahrers im Führerhaus (2) gerichtet wird, welche Position abhängig ist von der Länge des Lastkraftwagens und der Höhe des Führerhauses über dem Lastkraftwagen.

2. Vorrichtung nach Anspruch 1, bei welcher die Signalisiervorrichtung wenigstens eine Signalquelle (6) mit wenigstens etwa so vielen Richtmitteln (13, 16) an der Signalquelle umfasst wie die Zahl potentieller Positionen beträgt, wobei die Richtmittel fest auf diese Positionen hin gerichtet sind.

3. Vorrichtung nach Anspruch 1, bei welcher die Signalisiervorrichtung wenigstens eine Signalquelle (6) mit einstellbaren Richtmitteln (20) an der Signalquelle umfasst und die Richtmittel einstellbar auf wenigstens annähernd so viele Positionen gerichtet werden können wie die Zahl der potentiellen Positionen beträgt.

4. Vorrichtung nach Anspruch 3, bei welcher die Vorrichtung weiter einen Detektor (21) aufweist, um eine relevante potentielle Position zu bestimmen und die Vorrichtung weiter Steuermittel umfasst, um die Richtmittel auf die relevante potentielle Position einzustellen.

5. Vorrichtung nach Anspruch 3, bei welcher die Richtmittel unter Benutzung einer Steuerung antreibbar sind, um wenigstens annähernd sämtliche potentielle Positionen zu durchfahren.

6. Vorrichtung nach Anspruch 1, bei welcher die Richtmittel wenigstens eine Linse aufweisen.

7. Vorrichtung nach Anspruch 3, bei welcher die einstellbaren Richtmittel eine bewegliche Membran aufweisen, um eine selektive Übertragung entsprechend den relevanten potentiellen Positionen durchzuführen.

8. Vorrichtung nach Anspruch 3, bei welcher die Richtmittel eine neigbare Spiegelplatte aufweisen.

9. Vorrichtung nach Anspruch 1, bei welcher die Signalisiervorrichtung in einem Gehäuse untergebracht ist, das wenigstens an der Oberseite geschützt ist.

10. Vorrichtung nach Anspruch 9, bei welcher die Oberseite des Gehäuses eindrückbar ist.

11. Vorrichtung nach Anspruch 1, welche außerdem eine Heizeinrichtung aufweist, um eine Bedeckung mit Schnee zu verhindern.

12. Vorrichtung nach den Ansprüchen 2 und 11, bei welcher die Heizeinrichtung eine Lampe aufweist, die die Signalquelle bildet.

13. Vorrichtung nach Anspruch 2, bei welcher die Signalquelle eine Leuchtdiode aufweist.

## Revendications

1. Dispositif pour arrêter un camion (1) garé avec sa partie arrière tournée vers une plate-forme de chargement (3), comprenant un appareil de signalisation, **caractérisé par le fait que** l'appareil de signalisation est disposé au niveau de la surface de la route (5) située en face de la plate-forme de chargement à une première distance prédéterminée (L1, L2) de la plate-forme de chargement, et comprenant des moyens de guidage (13, 16, 20) qui sont orientés de manière à diriger le signal vers au moins un emplacement d'un conducteur dans la cabine (2) qui dépend de la longueur du camion et de la hauteur à laquelle est située la cabine du camion.

2. Dispositif selon la revendication 1, dans lequel l'appareil de signalisation comprend au moins une source émettrice de signal (6) avec un nombre de moyens de guidage (13, 16) au moins égal à peu près au nombre d'emplacements de chauffeur potentiels, les moyens de guidage étant orientés de manière fixe vers ces emplacements.

3. Dispositif selon la revendication 1, dans lequel l'appareil de signalisation comprend au moins une source émettrice de signal (6) comportant un ou plusieurs moyens de guidage (20) réglable(s), et le ou les moyens de guidage pouvant être orientées) de manière réglable selon au moins autant de positions qu'il existe d'emplacements de chauffeur potentiels.

4. Dispositif selon la revendication 3, dans lequel le dispositif comprend en outre un détecteur (21) pour déterminer un emplacement de chauffeur potentiel pertinent et comprend un moyen de commande pour régler le moyen de guidage vers l'emplacement potentiel pertinent.

5. Dispositif selon la revendication 3, dans lequel les moyens de guidage peuvent être actionnés à l'aide d'un moyen de commande de manière à passer par au moins environ tous les emplacements de chauffeur potentiels.

6. Dispositif selon la revendication 1, dans lequel le moyen de guidage comprend au moins une lentille.

7. Dispositif selon la revendication 3, dans lequel le moyen de guidage réglable comprend un diaphragme mobile pour la transmission sélective correspondant aux emplacements de chauffeurs potentiels pertinents.

8. Dispositif selon la revendication 3, dans lequel le moyen de guidage comprend un panneau de miroirs inclinable.

9. Dispositif selon la revendication 1, dans lequel l'appareil de signalisation est disposé dans un boîtier qui le protège au moins sur sa face supérieure.

10. Dispositif selon la revendication 9, dans lequel la face supérieure du boîtier est rabattable.

11. Dispositif selon la revendication 1, comprenant en outre un moyen de chauffage pour empêcher le recouvrement par la neige.

12. Dispositif selon les revendications 2 et 11, dans lequel le moyen de chauffage comprend une lampe formant la source émettrice de signal.

13. Dispositif selon la revendication 2, dans lequel la source émettrice de signal comprend une diode émettrice de lumière (LED).
